# EUROPÄISCHE PATENTSCHRIFT

(11) **EP 3 347 181 B1**
(45) Veröffentlichungstag und Bekanntmachung des Hinweises auf die Patenterteilung: **16.02.2022**
(21) Anmeldenummer: 16748115.9
(22) Anmeldetag: 05.08.2016
(51) Int. Cl.: B28B 11/00, E04D 1/04, E04D 1/36

(54) **DACHSTEIN MIT ANGEFORMTER WASSERSPERRE**
ROOF TILE HAVING A WATER BARRIER SHAPED THEREON
TUILE MUNIE D'UNE RETENUE D'EAU

(30) Priorität: 12.08.2015 DE 102015113328
(43) Veröffentlichungstag der Anmeldung: 18.07.2018
(73) Patentinhaber: Monier Roofing GmbH, 61440 Oberursel (DE)
(72) Erfinder: ARMBRUST, Jürgen, - (DE)
(74) Vertreter: Patentanwälte Olbricht Buchhold Keulertz
(86) Internationale Anmeldenummer: PCT/EP2016/068735
(87) Internationale Veröffentlichungsnummer: WO 2017/025455

(56) Entgegenhaltungen:
- EP-A1- 1 855 856
- GB-A- 664 010
- JP-A- S57 126 614
- JP-U- S6 156 418

## Beschreibung

Die Erfindung betrifft einen Dachstein mit angeformter Wassersperre nach Anspruch 1.

Dachsteine mit Wassersperre sind insbesondere für den Einsatz auf Dächern mit geringer Neigung geeignet. Ein Verlegen von herkömmlichen Dachsteinen auf Dächern mit einer geringen Neigung unter 22° ist problematisch, da das Maß der Überlappung der Dachsteine von der Dachneigung abhängig ist. Eine Überlappung der, von Traufe nach First verlegten, Dachsteine ist notwendig um ein Eindringen von Wasser, in Form von beispielsweise Schlagregen, zu verhindern. Weiterhin korreliert die Stärke der Überlappung mit der Dachneigung. Bei starker Neigung ist eine geringe Überlappung möglich, wohingegen bei geringer Neigung eine starke Überlappung von Dachsteinen ohne Wassersperre erforderlich ist. Dadurch bedingt, muss die Dachlattenkonstruktion entsprechend der Überlappung angepasst werden. Dieses, sowie der hohe Dachsteinbedarf bei starker Überlappung, erhöhen die Material- und Arbeitskosten deutlich. Zusätzlich weist die Dachkonstruktion mit stark überlappenden Dachsteinen bereits ein hohes Eigengewicht auf, wodurch weitere bauliche Maßnahmen beachtet werden müssen. Diese Problematik der starken Überlappung bei geringer Dachneigung wird mit Hilfe von Wassersperren überwunden.

Es sind verschiedene Verfahren für das Anbringen einer Wassersperre an einen Dachstein bekannt. Dabei wird meist der Dachstein, beziehungsweise der Dachsteinrohling, aus Frischbeton vorgeformt. Mittels Strangpressverfahren wird eine Frischbetonschicht als endloses Band auf aneinander gereihte Unterformen gleicher Länge aufgebracht. Die Oberflächenkontur des Dachsteins wird, bereits in diesen frühen Herstellungsschritten, durch Formwerkzeuge vorgegeben. Der Strang wird anschließend in einer Schneidstation in Untereinheiten zerschnitten, so dass jede Unterform einen einzelnen Dachsteinrohling trägt. Die Herstellung von Dachsteinen aus Beton im Strangpreßverfahren ist in den Dokumenten DE 3522 846 A1 und DE 22 52 047 C3 beschrieben.

Das Anbringen der Wassersperre an den Dachsteinrohling erfolgt anschließend, wobei diese häufig als separates Bauteil eingesetzt wird. Dabei kann die Wassersperre aus demselben Material wie der Dachstein bestehen, welches beispielsweise in DE 000 00 18 12 456 A1 gezeigt ist oder aus einem vom Dachstein abweichenden Material, wie es in DE 10 2005 050 657 B3 der Fall ist. Die Wassersperren werden jeweils als separates Bauteil in den noch frischen Beton des Dachsteins eingepresst. Die für die Funktion der Wassersperre notwendige Stabilität wird nach Trocknung des Frischbetons erhalten.

Hierbei nachteilig ist, dass Dachstein und Wassersperre einzeln hergestellt werden müssen und erst in einem weiteren Arbeitsschritt zusammengeführt werden können. Die Verbindung der beiden Teile weist Schwachstellen auf. So können bei der Herstellung Undichtigkeiten zwischen den beiden Bauteilen auftreten, wodurch Wasser in die Verbindungsstelle oder sogar ins Dach eintreten kann. Friert das in die Zwischenräume eingedrungene Wasser, kann es zu Frostsprengungen kommen und somit zur Beschädigungen der Verbindung, der Wassersperre und/oder des Dachsteins. Weiterhin weisen die im zweiten Beispiel verwendeten unterschiedlichen Materialen von Dachstein und Wassersperre uneinheitliche Materialeigenschaften auf. Ein differenzierender Wärmeausdehnungskoeffizient führt, bei Erwärmung der Dachfläche, zu Spannungen zwischen Wassersperre und Dachstein, welches dann einen Bruch der Verbindung zur Folge haben kann. Zusätzlich weisen diese Dachsteine ein heterogenes optisches Erscheinungsbild auf. Auch bei einer anschließenden Oberflächenbeschichtung kann es zu einem abweichenden Farbton der Wassersperre vom restlichen Dachstein kommen, da die Materialien verschiedene Oberflächeneigenschaften besitzen.

Eine andere Variante der Herstellung eines Dachsteins mit Wassersperre ist in EP 18 55 856 B1 beschrieben. Gemäß dieser Patentschrift wird die Wassersperre aus dem Material des Dachsteinrohlings ausgebildet, wobei ein Formstück im Bereich der Wasserläufe auf der Oberseite des kopfseitigen Endes des Dachsteinrohlings angeordnet wird und ein bewegbarer Formstempel in die hintere Kante des Dachsteinrohlings eindringt und den noch frischen Beton nach oben in eine Formmulde des Formstücks drückt. Hierfür werden zwei unterschiedliche Verfahren vorgeschlagen. Zum einen wird der Dachsteinrohling angehoben und so von unten an die Formgebungseinheit aus Formstück und Formstempel herangeführt. Zum anderen werden mehrere Formgebungseinheiten auf einem Förderband in gekippten Winkel auf die auf einem Laufband befindlichen Dachsteinrohlinge aufgesetzt. Bei konstanter gemeinsamer Bewegung der Formgebungseinheit und des Dachsteinrohlings erfolgt anschließend die Ausbildung der Wassersperre.

Beide Varianten in EP 18 55 856 B1 haben den Nachteil, dass keine genaue Ausrichtung des Dachsteinrohlings zu der Formgebungseinheit, oder entsprechend andersherum, erfolgen kann. Dadurch muss der Formstempel in einem relativ großen Abstand zu der Unterkante des Dachsteinrohlings, beziehungsweise der Oberkante der Unterform, geführt werden und ein Restanteil an Beton, ein sogenannter Grat, bleibt stehen. Würde kein entsprechender Abstand von Stempel zu Unterform gewahrt werden, so wäre eine Kollision der beiden Bauteile wahrscheinlich. Der zurückbleibende Grat führt dazu, dass nicht das gesamte, zur Verfügung stehende Frischbetonmaterial ausgenutzt wird. Zusätzlich birgt der schmale Grat die Gefahr, unregelmäßig abzubrechen, wodurch der Dachstein ein mangelhaftes Erscheinungsbild aufweist und vom Verbraucher als beschädigt angesehen wird. Dieses mindert die Qualität des Dachsteins deutlich. Weiterhin hat sich herausgestellt, dass die beschriebenen Verfahren nicht wirtschaftlich genug sind. So beschränkt das Anheben des Dachsteinrohlings in die Bearbeitungsposition im ersten beschriebenen Verfahren den Produktionstakt auf wenige Dachsteine pro Minute. Im zweiten Verfahren ist ein höherer Produktionstakt möglich, allerdings werden hier mehrere Formgebungseinheiten auf einem Förderband benötigt, welches die Maschinenanschaffungskosten erhöht. Zusätzlich ist hierbei problematisch, dass ein hoher Produktionstakt kaum ausreichend Zeit zum Reinigen der einzelnen Formgebungseinheiten zur Verfügung stellt. Eine ungenügende Reinigung führt zu einem Schichtaufbau in der Formmulde und somit zu einer unvollständigen Formung der Wassersperre. Bei ungenügender Höhe der Wassersperre kann Wasser ins Dach eindringen und bei nicht ausreichender Stärke kann die Wassersperre bei mechanischer Beanspruchung abbrechen. Zur Beseitigung des Schichtaufbaus in der Formmulde sind ferner häufige Unterbrechungen der laufenden Produktion notwendig, wodurch der Produktionstakt vermindert und eine erhöhte Personalleistung erforderlich wird.

Auch die Dokumente JP S57 126614 A, JP S61 56418 U und GB 664 010 A zeigen die Herstellung von Dachsteinen mit Wassersperre oder zumindest Dachsteine mit Wassersperre an sich. Das Dokument EP 18 55 856 B1 offenbart einen Dachstein mit angeformter Wassersperre nach dem Oberbegriff des Anspruchs 1.

Aufgabe der Erfindung ist es daher, die bestehenden Nachteile des Stands der Technik zu beseitigen, sowie Dachsteine mit angeformter Wassersperre in hoher Qualität für den Einsatz auf Dächern mit geringer Neigung bereitzustellen. Die Herstellung von Dachsteinen mit angeformter Wassersperre soll dabei kostengünstig, wirtschaftlich, zuverlässig und einfach durchführbar sein.

Darüber hinaus sollten die mit dem Verfahren hergestellten Dachsteine gut stapelbar sein, um einen kostengünstigen Transport zu ermöglichen und die Handhabung für den Verbraucher zu erleichtern.

Hauptmerkmale der Erfindung sind im kennzeichnenden Teil des Anspruchs 1 angegeben. Ausgestaltungen sind Gegenstand der Ansprüche 2 bis 5.

Bei einem Verfahren zur Herstellung eines Dachsteins mit einer Wassersperre, wobei die Wassersperre an einen Dachsteinrohling angeformt wird, der auf einer Unterform einer Formgebungseinheit mit einem Formstück und einem relativ dazu bewegbaren Formstempel zugeführt wird, wobei das Formstück auf eine Oberseite eines kopfseitigen Endes des Dachsteinrohlings aufgelegt wird und der Formstempel gegen das kopfseitige Ende des Dachsteinrohlings drückt, wobei Material des Dachsteinrohlings in eine Formmulde des Formstücks gedrückt wird, sieht die Erfindung vor, dass der Dachsteinrohling unterhalb der Formgebungseinheit angeordnet und die Formgebungseinheit vertikal auf den Dachsteinrohling abgesengt wird.

Die Verfahrensführung ermöglicht eine exakte Ausrichtung des Dachsteinrohlings unter der Formgebungseinheit. Da der Dachsteinrohling unterhalb der Formgebungseinheit gestoppt wird und die Anformung nicht während einer Bewegung des Dachsteinrohlings erfolgt, ist eine präzise Ausrichtung unter der Formgebungseinheit möglich. Anschließend wird die Formgebungseinheit vertikal abgesengt, welches ebenfalls präzise ausgerichtet möglich ist. Weiterhin ist bei dieser Verfahrensführung ein deutlich erhöhter Produktionstakt, verglichen mit dem Verfahren gemäß dem Stand der Technik, in dem der Dachsteinrohling angehoben wird, erreichbar. Auch wird nur eine Formgebungseinheit benötigt, welches die Anlagenkosten gegenüber der zweiten Variante aus EP 18 55 856 B1 reduziert.

Durch diese exakte Positionierung des Dachsteinrohlings unter der Formgebungseinheit wird erreicht, dass der Formstempel parallel zu der Unterform und dem Formstück bewegt wird, wobei eine Unterseite des Formstempels auf einer Höhe mit einer Unterseite des Dachsteinrohlings geführt wird. Die Spitze des Formstempels kann also direkt in der Trennebene zwischen der Oberseite der Unterform und der Unterseite des Dachsteinrohlings eindringen. Dieses wird im Folgenden als Eindringposition P des Formstempels bezeichnet. Durch diese Eindringposition kann eine Wassersperre im Bereich der Wasserläufe ausgebildet werden, ohne dass ein Grat entsteht. Das beim Stand der Technik stehen bleibende Betonvolumen steht nun vollständig zur Ausbildung der Wassersperre zur Verfügung, so dass eine massivere Dimensionierung der Wassersperre und eine höhere Verdichtung des Frischbetons erzielt wird. Die massivere Dimensionierung reduziert eine mögliche Bruchgefahr und die erhöhte Verdichtung des Betons reduziert die Porosität der Wassersperre. Durch eine verminderte Porosität kann weniger Wasser eindringen und die Frostbeständigkeit des Dachsteins wird deutlich gesteigert.

Für die Formung einer qualitativ hochwertigen Wassersperre ist bevorzugt, dass ein ausreichendes Volumen V an Frischbeton zur Verfügung steht, so dass eine möglichst hohe Verdichtung und eine ausreichend massive Dimensionierung der Wassersperre erzielt werden kann. Dieses ist wichtig da die Wassserdichtigkeit der Wassersperre mit der Verdichtung des Frischbetons zunimmt sowie die Bruchgefahr mit einer Zunahme der Dimensionierung abnimmt. Dieses wird durch verschiedene Parameter in favorisierten Bereichen gewährleistet.

In einer bevorzugten Ausführungsform des Verfahrens wird der Formstempel mit einer Eindringtiefe E von 10 bis 20 mm in das kopfseitige Ende des Dachsteinrohlings gedrückt. Weiterhin kann die Wassersperre mit einem Anstellwinkel von 60° bis 90° ausgebildet werden. Vorzugsweise beträgt der Anstellwinkel β etwa 75°. Dieser Anstellwinkel β wird durch den Keilwinkel α des Formstempels bestimmt. Der Keilwinkel α und die Eindringtiefe E des Formstempels sollten so aufeinander abgestimmt werden, dass am kopfseitigen Dachsteinende ein Rücksprung mit einer möglichst geringen Tiefe T (T = E) entsteht, aber dennoch ein möglichst großes Volumen V an Frischbeton zur Verfügung steht. Die Tiefe T des Rücksprungs der Wassersperre wird vom ursprünglichen kopfseitigen Rand des Dachsteinrohlings her gemessen. Die möglichst geringe Tiefe T, welche über die Eindringtiefe E bestimmt wird, ist wichtig, damit die Eindecklänge der Dachsteine nicht durch eine ungünstige Positionierung der Einhängenasen reduziert wird. Die Einhängenasen dienen der Befestigung der Dachsteine auf der Dachlattenkonstruktion.

Der Keilwinkel α des Formstempels mit einer Neigung von 60° bis 90° ist bevorzugt, damit bei der Bewegung des Formstempels, vom kopfseitigen Rand her in Richtung des Dachsteinrohlings, Frischbeton aufgeschoben und in die Formmulde des Formstücks gedrückt werden kann. Dabei muss die Keilwirkung hoch genug sein, damit eine ausreichende Aufwärtsbewegung des Frischbetons erzielt wird und die Formmulde entsprechend ausgefüllt und verdichtet wird. Bei einem größeren Keilwinkel (> 90°) würde der Frischbeton nach unten gedrückt werden, wodurch es zu einer Verdichtung der Unterseite kommen würde. Die Formmulde würde nicht mit aufgeschobenen Frischbeton gefüllt werden, wodurch keine Wassersperre ausgebildet werden würde. Bei einem Keilwinkel kleiner 60° muss der Formstempel eine sehr lange Vorschubbewegung ausführen, damit bei der geringen Keilwirkung eine ausreichende Menge Frischbeton in die Formmulde bewegt wird. Dabei ist nicht nur die vollständige Füllung der Formmulde wichtig, sondern auch eine Verdichtung des Materials. Aufgrund der großen Eindringtiefe des Formstempels bei geringem Keilwinkel würde ein tiefer Rücksprung entstehen, wodurch die Einhängenasen an der Unterseite des Dachsteins sehr weit vom ursprünglichen kopfseitigen Rand des Dachsteins entfernt angeordnet werden müssten. Je größer dieser Abstand M der Einhängenasen ist, desto geringer wird die Eindecklänge des Dachsteins beim Einhängen an den Dachlatten.

Die Wassersperre muss im Bereich des Wasserlaufs des Dachsteins eine ausreichende Höhe H zwischen der Oberfläche des Wasserlaufs und der Oberseite der Wassersperre aufweisen. Damit der windbedingte Eintrieb von Regenwasser im Überlappungsbereich sicher verhindert werden kann, sollte die Wassersperre wenigstens eine Höhe H von 5 mm aufweisen. Wird die Höhe H geringer ausgeführt, besteht die Gefahr der Überflutung der Wassersperre, wodurch Wasser in den Dachstuhl eindringen würde. Um zusätzlich eine Stapelbarkeit der Dachsteine sicherzustellen, darf die Höhe der Wassersperre auf der Oberseite eines im Stapel liegenden Dachsteins, maximal einer Vorsprungshöhe der Einhängenasen auf der Unterseite des im Stapel oberhalb liegenden Dachsteins, entsprechen. Wird die Höhe H der Wassersperre höher angesetzt, lassen sich die Dachsteine nicht mehr gerade stapeln, da der obere Dachstein dann nicht mehr wie üblich über die Einhängenase abgestützt wird, sondern über die zu hohe Wassersperre des unterhalb liegenden Dachsteins. Der Dachsteinstapel würde schief werden und kippen. Die Höhe der Wassersperre wird während des Herstellungsverfahrens über die Form der Formmulde bestimmt. Daraus ergibt sich bevorzugt, dass die Formmulde die Wassersperre mit einer Höhe von 5 bis 20 mm ausbildet.

In einer alternativen Ausgestaltung des erfindungsgemäßen Verfahrens ist vorgesehen, dass die Formmulde die Wassersperre in einer Stärke S von 5 bis 15 mm formt. Dachsteine werden beim Verlegen meistens am kopfseitigen Ende angefasst und oftmals von Dachdecker zu Dachdecker geworfen, so dass die angeformte Wassersperre hohen mechanischen Belastungen ausgesetzt ist. Um der Wassersperre eine ausreichende Stabilität zu verleihen, wodurch eine Abbruchgefahr der Wassersperre minimiert werden soll, muss deren von der Oberseite des Dachsteins ausgehende Wurzel eine Stärke S von wenigstens 5 mm besitzen. Wird die Stärke S geringer ausgeführt, so leidet nicht nur die Stabilität, sondern auch die Wasserdichtigkeit der Wassersperre. Die Stärke S sollte allerdings auch nicht mehr als 15 mm betragen, denn dies würde die Positionierung der Einhängenasen und dadurch die Eindecklänge der Dachsteine negativ beeinflussen.

Bei einer bevorzugten Fortbildung des Verfahrens wird die Oberseite des Dachsteinrohlings vor der Ausbildung der Wassersperre mit einem Trennmittel versehen. Dieses verhindert ein Anhaften von Frischbeton und damit einen Schichtaufbau in der Formmulde des Formstücks. Eine verbesserte Anformgenauigkeit der Wassersperre, auch über einen langen Zeitraum während der Produktion, kann somit gewährleistet werden. Beispielweise kann als Trennmittel Sand verwendet werden, welcher inert und kostengünstig ist. Nach dem Formungsvorgang sind die Sandpartikel, des losen, trockenen Sandes, in die Oberseite des Dachsteinrohlings eingedrückt, wodurch das optische Erscheinungsbild nicht oder nur minimal beeinflusst wird. In einer Variante des Verfahrens wird das Trennmittel als 2 bis 5 cm breiter Streifen auf die Oberseite des kopfseitigen Endes des Dachsteinrohlings aufgetragen. Diese Breite an aufgetragenem Trennmittel gewährleistet, dass es zu keinem Schichtaufbau in der Formmulde kommt, ohne dass die gesamte Oberseite des Dachsteins mit Trennmittel versehen werden müsste. Dadurch wird Trennmittel gespart und der gewünschte Effekt weiterhin erzielt. Weitere Substanzen als Trennmittel und verschiedene Auftragevarianten sind denkbar.

Gemäß einer Ausgestaltung des Verfahrens kann der Dachsteinrohling mit angeformter Wassersperre weiteren Bearbeitungsschritten unterzogen werden. So wird der Frischbeton anschließend getrocknet und härtet aus. Auch eine Oberflächenbeschichtung sowie eine Farbbeschichtung, um ein vom Verbraucher gewünschte optisches Erscheinungsbild zu erzielen, sind möglich.

Die Erfindung betrifft einen Dachstein mit angeformter Wassersperre, der mit dem vorher beschriebenen Verfahren hergestellt wurde, wobei die Wassersperre und der Dachstein einstückig ausgebildet sind und die Wassersperre eine ebene Rückseite aufweist. Wenn erfindungsgemäß die Wassersperre und der Dachstein einstückig ausgebildet sind, weist die Verbindung der beiden keine Schwachstellen auf, die zu Undichtigkeit oder witterungsbedingten Schäden führen würden. Zusätzlich ermöglicht die ebene Rückseite, dass möglichst viel Volumen an Frischbeton zur Verfügung steht, um die Wassersperre auszubilden. Dadurch kann ausreichend Material für eine massive Dimensionierung und hohe Dichte verformt werden.

Der Dachstein ist in einer bevorzugten Ausführungsform dadurch gekennzeichnet, dass die Wassersperre eine erhöhte Dichte aufweist. Dieses reduziert die Porosität und vermindert dadurch das Eindringen von Wasser. Die Stabilität gegenüber Umwelteinflüssen wird gegenüber dem Stand der Technik erhöht.

In favorisierten Ausführungsformen weist der Dachstein analog zu dem Verfahren bevorzugte formgebende Parameter auf. So sollte die Wassersperre einen Anstellwinkel β von 60° bis 90° aufweisen. Im speziellen wird ein Anstellwinkel β von 75° als optimal angesehen. Weiterhin wird vorgezogen, dass die Wassersperre eine Stärke S von 5 bis 15 mm aufweist, wodurch eine ausreichende Stabilität der Wassersperre gewährleistet wird. Das Eindringen von Wasser in den Dachstuhl und eine gute Stapelbarkeit der Dachsteine wird sichergestellt, indem die Wassersperre eine Höhe von 5 bis 20 mm aufweist. Damit die Wassersperre aus ausreichend Frischbeton ausgebildet wird, welches die Verdichtung an dieser Stelle beeinflusst, und zugleich die Decklänge beim Dachdecken nicht negativ beeinflusst, ist die Wassersperre, im Bereich des Wasserlaufs mit einer Tiefe T eines Rücksprungs, zum kopfseitigen Ende des Dachsteinrohlings, von 10 bis 20 mm ausgebildet.

Es ist vorgesehen, dass mindestens eine Einhängenase an der Unterseite des Dachsteinrohlings in einem Mindestabstand M zum kopfseitigen Ende des Dachsteinrohlings ausgebildet ist. Dabei entspricht der Mindestabstand M der mindestens einen Einhängenase mindestens der Summe aus der Tiefe T des Rücksprungs und der Stärke S der Wassersperre (M ≥ T + S). Dieses stellt sicher, dass beim Stapeln der Dachsteine die angeformte Wassersperre auf der Oberseite eines Dachsteins nicht mit den Einhängenasen auf der Unterseite eines im Stapel oberhalb liegenden Dachsteins kollidiert. Wäre der Mindestabstand M kleiner als die Summe aus der Tiefe T und der Stärke S, wären Wassersperre und Einhängenasen zumindest teilweise auf der gleichen Position. Dies würde dazu führen, dass der Dachsteinstapel schief wird und schneller kippen könnte.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen.

Es zeigen:
- Fig. 1: Ansicht auf einen erfindungsgemäßen Dachstein
- Fig. 2: Querschnittsansicht eines Dachsteinrohlings vor der Anformung einer Wassersperre
- Fig. 3: Querschnittsansicht eines Dachsteinrohlings während der Anformung einer Wassersperre
- Fig. 4: Querschnittansicht eines erfindungsgemäßen Dachsteins mit angeformter Wassersperre

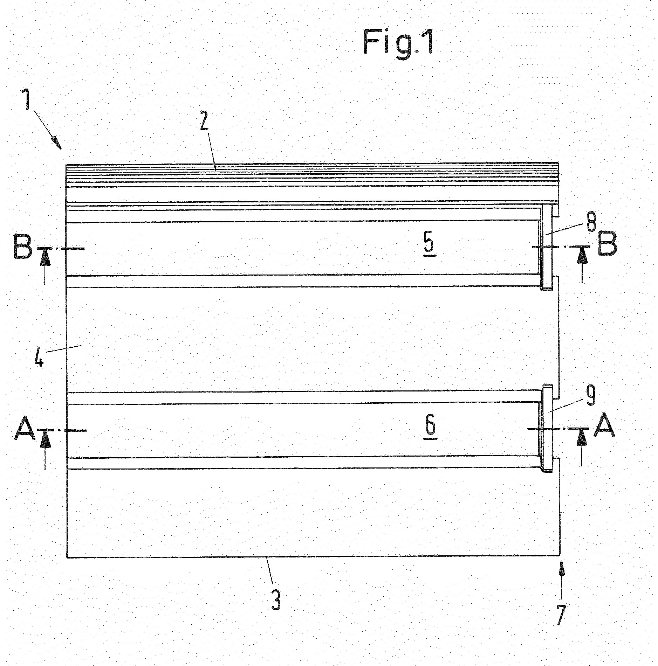

Fig. 1 zeigt einen erfindungsgemäßen Dachstein 1 in der Draufsicht. Der Dachstein 1 weist an seinen Längsrändern einen Wasserfalz 2 und einen Deckfalz 3 sowie eine dazwischen liegende Mittelkrempe 4 auf. Zwischen den Falzen 2, 3 und der Mittelkrempe 4 ist jeweils ein Wasserlauf 5, 6 ausgebildet. An einem kopfseitigen Ende 7 des Dachsteins 1 ist jeweils im Bereich des Wasserlaufs 5, 6 eine Wassersperre 8, 9 ausgebildet. Dabei erstreckt sich die Wassersperre 8, 9 mindestens über den Bereich des Wasserlaufs 5, 6. Es kann aber auch eine einzige Wassersperre über die ganze Länge des kopfseitigen Randes 7 des Dachstein 1 verlaufen.

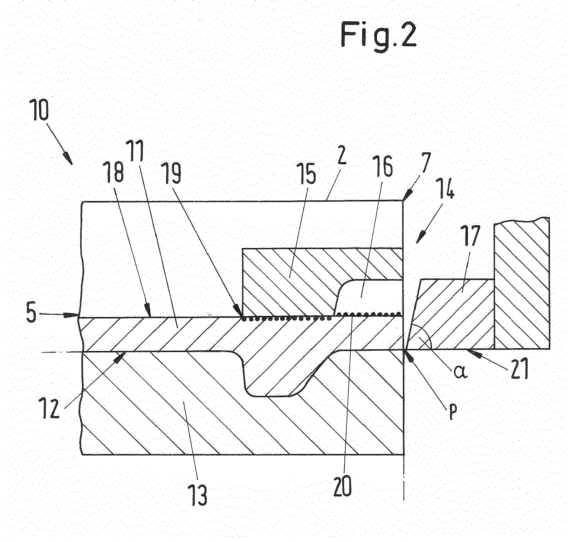

Das Verfahren zur Herstellung eines Dachsteins mit einer Wassersperre sowie der nach diesem Verfahren hergestellte Dachstein werden nachfolgend anhand der Fig. 2 bis 4 erläutert. In den Figuren 2 bis 4 ist der Dachstein 1 oder Vorstufen des Dachsteins 1 aus Fig. 1 im Bereich des kopfseitigen Rands 7 im Längsschnitt B - B dargestellt, wobei der Längsschnitt durch den Wasserlauf 5 verläuft.

Die Anformung der Wassersperre 8, 9 erfolgt am kopfseitigen Ende 7 im Bereich des Wasserlaufs 5 eines Dachsteinrohlings 10. Aus diesem Dachsteinrohling 10 entsteht durch Anformung der erfindungsgemäßen Wassersperre 8, 9 der fertige Dachstein 1. Der Dachsteinrohling 10 aus Frischbeton 11 liegt mit seiner Unterseite 12 auf einer Unterform 13 auf. Nach Stoppen und Ausrichtung des Dachsteinrohlings 10 unterhalb einer Formgebungseinheit 14, die aus einem Formstück 15 mit einer Formmulde 16 und einem Formstempel 17 gebildet ist, wird diese vertikal abgesenkt. Dabei ist die seitliche eine Öffnung der Formmulde 16 gegenüber dem keilförmigen Formstempel 17 angeordnet. Durch das Absenken der Formgebungseinheit 14 liegt das Formstück 15 mit der Formmulde 16, deren Innenkontur der Form der herzustellenden Wassersperre entspricht, auf einer Oberseite 18 des Dachsteinrohlings 10 nahe des kopfseitigen Randes 7. Die Formmulde 16 weist einen L-förmigen Querschnitt mit abgerundeten Ecken auf. Um ein Anhaften von Frischbeton 11 und damit einen Schichtaufbau in der Formmulde 16 zu verhindern, wird vor dem Aufsetzen des Formstücks 15 nahe des kopfseitigen Randes 7 eine Trennschicht 19 auf die Oberseite 18 des Dachsteinrohlings 10 aufgebracht. Diese Trennschicht 19 kann vorzugsweise aus einer aufgestreuten Lage loser, trockener Sandpartikel 20 bestehen und verhindert das Anhaften des Frischbetons 11 in der Formmulde 16. Der Frischbeton 11 für die Formung der Wassersperre 8 wird gewonnen, indem der mit einem Keilwinkel α versehene Formstempel 17 vom kopfseitigen Ende 7 her in den Dachsteinrohling 10 eindringt. In einer bevorzugten Ausführungsform wird der Formstempel 17 parallel zu der Unterform 13 reversierend bewegt, wobei die Unterseite 21 des Formstempels 17 auf einer Höhe mit der Unterseite 12 des Dachsteinrohlings geführt wird. Die Eindringposition wird mit P bezeichnet.

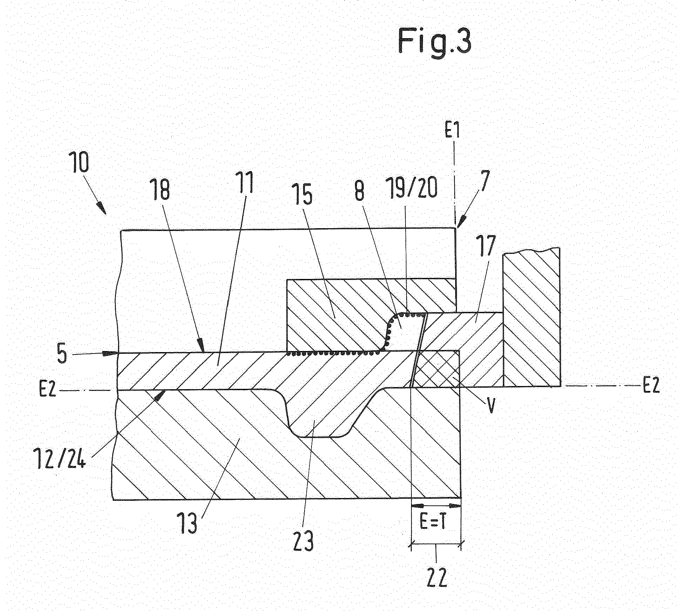

Beim weiteren Vorschub des Formstempels 17, wie es in Fig. 3 dargestellt ist, löst sich der Frischbeton 11 von der Unterform 13 ab und gleitet auf der schrägen Keilfläche aufwärts in die Formmulde 16 hinein, wo er zur Wassersperre 8 verdichtet wird. Hierbei legen sich die Partikel der Trennschicht 19, beispielweise Sandpartikel 20, an die Wandung der Formmulde 16 an und sorgen so für eine gute Ablösung der geformten Wassersperre 8 von der Formmulde 16. Nach dem Formvorgang sind die Sandpartikel 20 in die Oberseite 18 des Dachsteinrohlings 10 bzw. der Wassersperre 8 eingedrückt, so dass sie optisch nicht oder nur minimal in Erscheinung treten. Aufgrund der Vorschubbewegung des Formstempels 17 springt das kopfseitige Ende 7 des Dachsteinrohlings 10 im Bereich des Wasserlaufs 5 bzw. die dort angeordnete Wassersperre 8 gegenüber einer Ebene E1 zurück. Die Ebene E1 wird durch das ursprüngliche kopfseitige Ende 7 gebildet. Dieser Rücksprung 22 weist in einer Ebene 2 (E2), die durch die Trennschicht zwischen Dachsteinrohling 10 und Unterform13 verläuft, eine Tiefe T auf, die der Eindringtiefe E des Formstempels 17 entspricht.

Für die Formung einer qualitativ hochwertigen Wassersperre 8, 9 ist es entscheidend, dass ein ausreichendes Volumen V (s. Fig. 3, Kreuzschraffur) an Frischbeton 11 zur Verfügung steht, wodurch eine möglichst hohe Verdichtung des Frischbetons 11 erzielt werden kann. Dabei ist die Wasserdichtigkeit der Wassersperre 8, 9 umso besser, je höher die Verdichtung des Frischbetons 11 in der Formmulde 16 ist.

Die Größe des zur Verfügung stehenden Volumens V an Frischbeton 11 und dessen Verdichtung wird im Wesentlichen durch folgende Werkzeug- und Verfahrensparameter bestimmt:
- den Keilwinkel α des Formstempels 17
- die Eindringtiefe E des Formstempels 17
- die Eindringposition P des Formstempels 17

Es wird favorisiert, dass der Keilwinkel α des Formstempels 17 mindestens 60° aufweist und 90° nicht überschreiten sollte. Vorzugsweise beträgt der Keilwinkel α etwa 75°.

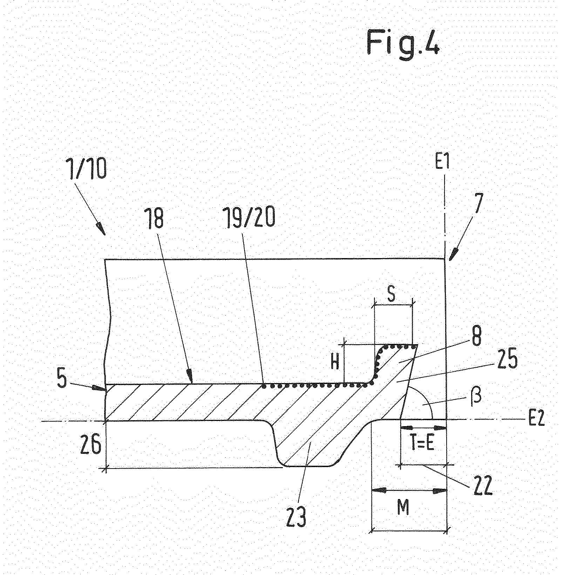

Wird der Keilwinkel α zu klein gewählt, so muss der Formstempel 17 eine sehr lange Vorschubbewegung ausführen, damit bei der geringen Keilwirkung eine zum Befüllen der Formmulde 16 und zum Verdichten ausreichende Aufwärtsbewegung des Frischbetons 11 erzeugt wird. In diesem Fall entsteht am kopfseitigen Ende 7 des Dachsteinrohlings 10 aufgrund der notwendigen großen Eindringtiefe E des Formstempels 17 ein sehr tiefer Rücksprung 22, wodurch die Einhängenasen 23 an der Unterseite 12 des Dachsteinrohlings 10 sehr weit von der Ebene E1 des kopfseitigen Endes 7 beabstandet angeordnet werden müsste. Je größer dieser Abstand M (s. Fig. 4) wird, desto geringer ist die mögliche Eindecklänge des Dachsteins 1 beim Einhängen an den Dachlatten. Eine Reduzierung der Eindecklänge hat den Nachteil, dass in First-Trauf-Richtung mehr traufparallel verlaufende Reihen von Dachsteinen verlegt werden müssen. Dies erhöht die Last auf der Dachunterkonstruktion, die Material- und die Arbeitskosten.

Der Keilwinkel α des Formstempels 17 und die Eindringtiefe E des Formstempels 17 sollten also so aufeinander abgestimmt werden, dass am Dachstein 1 ein Rücksprung 22 mit einer möglichst geringen Tiefe T entsteht, damit einerseits die Eindecklänge des Dachsteins 1 nicht durch eine ungünstige Positionierung von Einhängenasen 23 reduziert wird und andererseits dennoch ein möglichst großes Volumen V an Frischbeton 11 gewonnen wird. Für die Gewinnung des Volumens V an Frischbeton 11 ist es zudem wichtig, die Eindringposition P des Formstempels 17 in die Trennebene (= E2) zwischen der Unterseite 12 des Dachsteinrohlings 10 und einer Oberseite 24 der Unterform 13 zu legen. In diesem Fall entsteht am kopfseitigen Ende 7 im Bereich des Wasserlaufes 5 kein Grat mehr, sondern lediglich der Rücksprung 22. Das bisher zur Ausbildung des Grates vergeudete Betonvolumen wird komplett in die Wassersperre 8 verpresst. Hierdurch kann die Wassersperre 8 stärker dimensioniert werden und es ergibt sich eine bessere Verdichtung des Frischbetons 11 im Bereich der Wassersperre 8.

Zusammenfassend erfolgt das Anformen der Wassersperre 8, 9 in vier Arbeitsschritten: Zuerst wird der Dachsteinrohling 10 unterhalb der Formgebungseinheit 14 positionsgenau platziert, wobei sich das Formstück 15 nahe des kopfseitigen Endes 7 des Dachsteinrohlings 10 befindet. Die Formgebungseinheit 14 ist vertikal in Richtung der Oberseite 18 des Dachsteinrohlings 10 reversierend bewegbar. In einem ersten Arbeitsschritt wird die Formgebungseinheit 14 in Richtung der Oberseite 18 des Dachsteinrohlings 10 abgesenkt, wobei das Formstück 15 an der Oberseite 18 des Dachsteinrohlings 10 zur Anlage kommt und die seitliche Öffnung der Formmulde 16 am kopfseitigen Ende 7 angeordnet ist. Hierbei wird gleichzeitig der Formstempel 17 abgesenkt, so dass dessen Spitze vor der Unterform 13 und in Höhe der Trennebene zwischen der Oberseite 24 der Unterform 13 und der Unterseite 12 des Dachsteinrohlings 10 positioniert wird. Im zweiten Arbeitsschritt führt der Formstempel 17 einen parallel zur Unterform 13 erfolgenden und auf das kopfseitige Ende des Dachsteinrohlings 30 gerichtete Bewegung aus, bei der der mit dem Keilwinkel α versehene Formstempel 17 in den Frischbeton 11 eindringt und diesen in die Formmulde 16 des Formstücks 15 hineinpresst. Hierbei dringt der Formstempel 17 um die Eindringtiefe E in die Formmulde 16 ein. Der verpresste Frischbeton 11 füllt die Formmulde 16 vollständig aus, so dass ein Dachsteinrohling 10 mit einer monolithisch angeformten Wassersperren 8, 9 entsteht. Im dritten Arbeitsschritt wird der Formstempel 17 dann in seine Ausgangsposition zurück geführt, und im vierten Arbeitsschritt wird die Formgebungseinheit 14 von der Oberseite des Dachsteinrohling 18 zurückgezogen, so dass sich das Formstück 15 von der Oberseite des Dachsteinrohlings 10 entfernt und die Formmulde 16 die monolithisch angeformte Wassersperren 8, 9 frei gibt. Weitere dem Herstellungsverfahren angeschlossene Schritte können der Oberflächenbeschichtung, der Aushärtung und der Verpackung dienen.

Der mit dem erfindungsgemäßen Verfahren hergestellte Dachsteinrohling 10 beziehungsweise Dachstein 1 mit ausgebildeter Wassersperre 8 ist in Fig. 4 gezeigt. Die im Verfahren bevorzugten formgebenden Parameter sind am fertigen Dachstein 1 zu erkennen. So weist die Wassersperre 5 einen, auf die Ebene E2 bezogenen, Anstellwinkel β auf, der dem Keilwinkel α des Formstempels 17 entspricht. Weiterhin entspricht die Tiefe T des Rücksprungs 22 der Eindringtiefe E des Formstempels 17, welche mindestens 10 mm betragen und 22 mm nicht überschreiten sollte. Die Form der Formmulde 16 gibt die Form der Wassersperre 8 vor, insbesondere die Höhe H (H = 5 bis 20 mm) und die Stärke S (S = 5 bis 15 mm), wobei die Stärke S der Wassersperre 8 der Breite einer von der Oberseite 18 des Dachsteins 1 ausgehenden Wurzel 25 entspricht.

Um die Stapelbarkeit der Dachsteine 1 sicherzustellen, sollte die Wassersperre 8 auf der Oberseite 18 eines im Stapel unteren Dachsteins 1 nicht an der gleichen Stelle positioniert sein, wie die Einhängenase 23 auf der Unterseite 12 eines im Stapel oberen Dachsteins 1, denn ansonsten würde der Stapel der Dachsteine 1 schief werden und kippen.

Damit folglich beim Stapeln die Kollision zwischen der Wassersperre 8 und der Einhängenase 23 verhindert wird, sollten die Einhängenasen 23 einen Mindestabstand M zum kopfseitigen Ende 7 des Dachsteins 1 einhalten, der sich wie folgt ergibt: M ≥ Tiefe T des Rücksprungs 22 + Stärke S der Wurzel 25 der Wassersperre 8, 9.

### Bezugszeichenliste

- 1: Dachstein
- 2: Wasserfalz
- 3: Deckfalz
- 4: Mittelkrempe
- 5: Wasserlauf
- 6: Wasserlauf
- 7: kopfseitiges Ende
- 8: Wassersperre
- 9: Wassersperre
- 10: Dachsteinrohling
- 11: Frischbeton
- 12: Unterseite
- 13: Unterform
- 14: Formgebungseinheit
- 15: Formstück
- 16: Formmulde
- 17: Formstempel
- 18: Oberseite
- 19: Trennschicht
- 20: Sandpartikel
- 21: Unterseite des Formstempels 17
- 22: Rücksprung
- 23: Einhängenase
- 24: Oberseite der Unterform 13
- 25: Wurzel der Wassersperre 8, 9
- 26: Vorsprungshöhe der Einhängenase 23
- A-A: Schnittebene durch den Dachstein 1
- B-B: Schnittebene durch den Dachstein 1
- E: Eindringtiefe des Formstempels 17
- E1: Ebene des ursprünglichen kopfseitigen Randes 7
- E2: Trennebene zwischen der Unterform 7 und dem Dachsteinrohling 10
- H: Höhe der Wassersperre 8, 9 und der Formmulde 16
- M: Mindestabstand der Einhängenase 23
- P: Eindringposition des Formstempels 17
- S: Stärke der Wurzel der Wassersperre 8, 9 und der Formmulde 16
- T: Tiefe des Rücksprungs 22
- V: Volumen an Frischbeton 11
- α: Keilwinkel des Formstempels 17
- β: Anstellwinkel des Dachsteinrohlings 10 / Dachsteins 1

## Patentansprüche

1. Dachstein (1) mit angeformter Wassersperre (8, 9), der mit einem Verfahren hergestellt ist, bei dem die Wassersperre (8, 9) an einen Dachsteinrohling (10) angeformt wird, der auf einer Unterform (13), einer Formgebungseinheit (14), mit einem Formstück (15) und einem relativ dazu bewegbaren Formstempel (17), zugeführt wird wobei das Formstück (15) auf eine Oberseite (18) eines kopfseitigen Endes (7) des Dachsteinrohlings (10) aufgelegt wird und der Formstempel (17) parallel zu der Unterform (13) und dem Formstück (15) bewegt wird und gegen das kopfseitige Ende (7) des Dachsteinrohlings (10) drückt, sodass Material des Dachsteinrohlings (10) in eine Formmulde (16) des Formstücks (15) gedrückt wird, wobei der Dachsteinrohling (10) unterhalb der
Formgebungseinheit (14) angeordnet wird und dass die Formgebungseinheit (14) vertikal auf den Dachsteinrohling (10) abgesenkt wird, wobei die Wassersperre (8, 9) und der Dachstein (1) einstückig ausgebildet sind und die Wassersperre (8, 9) eine ebene Rückseite aufweist, wobei
die Wassersperre (8, 9) mit einer Tiefe T zum kopfseitigen Ende (7) des Dachsteinrohlings (10) von 10 bis 20 mm eingerückt ist, **dadurch gekennzeichnet, dass** mindestens eine Einhängenase (23) an der Unterseite (12) des Dachsteinrohlings (10) in einem Mindestabstand M zum kopfseitigen Ende (7) des Dachsteinrohlings (10) ausgebildet ist, wobei der Mindestabstand M mindestens der Summe aus der Tiefe T des Rücksprungs (22) und der Stärke S der Wassersperre (8, 9) entspricht (M ≥ T + S).

2. Dachstein (1) mit angeformter Wassersperre (8, 9) nach Anspruch 1, **dadurch gekennzeichnet, dass** die Wassersperre (8, 9) eine erhöhte Dichte aufweist.

3. Dachstein (1) mit angeformter Wassersperre (8, 9) nach einem der Ansprüche 1 und 2, **dadurch gekennzeichnet, dass** die Wassersperre einen Anstellwinkel β von 60° bis 90° aufweist.

4. Dachstein (1) mit angeformter Wassersperre (8, 9) nach einem der Ansprüche 1 bis 3, **dadurch gekennzeichnet, dass** die Wassersperre (8, 9) eine Stärke S von 5 bis 15 mm aufweist.

5. Dachstein (1) mit angeformter Wassersperre (8, 9) nach einem der Ansprüche 1 bis 4, **dadurch gekennzeichnet, dass** die Wassersperre (8, 9) eine Höhe H von 5 bis 20 mm aufweist.

## Claims

1. Roof tile (1) having a water barrier (8, 9) shaped thereon, which is produced by a method in which the water barrier (8, 9) is shaped on a roof tile blank (10) that is supplied on a lower mould (13) to a forming unit (14) with a forming piece (15) and a forming punch (17) movable relative thereto, wherein the forming piece (15) is placed on an upper side (18) of a head end (7) of the roof tile blank (10) and the forming punch (17) is moved parallel to the lower mould (13) and the forming piece (15) and presses against the head end (7) of the roof tile blank (10) so that material of the roof tile blank (10) is pressed into a mould cavity (16) of the forming piece (15), wherein the roof tile blank (10) is arranged below the forming unit (14), and that the forming unit (14) is lowered vertically onto the roof tile blank (10), wherein the water barrier (8, 9) and the roof tile (1) are formed in one piece and the water barrier (8, 9) has a flat rear side, wherein the water barrier (8, 9) is indented from the head end (7) of the roof tile blank (10) to a depth T of 10 to 20 mm, **characterised in that** at least one hanging lug (23) is formed on the underside (12) of the roof tile blank (10) at a minimum distance M from the head end (7) of the roof tile blank (10), wherein the minimum distance M corresponds to at least the sum of the depth T of the indentation (22) and the thickness S of the water barrier (8, 9) (M > T + S).

2. Roof tile (1) having a water barrier (8, 9) shaped thereon according to claim 1, **characterised in that** the water barrier (8, 9) has an increased density.

3. Roof tile (1) having a water barrier (8, 9) shaped thereon according to any one of claims 1 and 2, **characterised in that** the water barrier is set at an angle β of 60° to 90°.

4. Roof tile (1) having a water barrier (8, 9) shaped thereon according to any one of claims 1 to 3, **characterised in that** the water barrier (8, 9) has a thickness S of 5 to 15 mm.

5. Roof tile (1) having a water barrier (8, 9) shaped thereon according to any one of claims 1 to 4, **characterised in that** the water barrier (8, 9) has a height H of 5 to 20 mm.

## Revendications

1. Tuile (1) avec une retenue d'eau (8, 9) formée qui est fabriquée avec un procédé, pour laquelle la retenue d'eau (8, 9) est formée au niveau d'une préforme de tuile (10) qui est conduite sur un moule inférieur (13), à une unité de formage (14), avec une pièce de moule (15) et un poinçon de moule (17) mobile par rapport à celle-ci, dans laquelle la pièce de moule (15) est placée sur un côté supérieur (18) d'une extrémité (7) côté tête de la préforme de tuile (10) et le poinçon de moule (17) est déplacé parallèlement au moule inférieur (13) et à la pièce de moule (15) et presse contre l'extrémité (7) côté tête de la préforme de tuile (10) de sorte que du matériau de la préforme de tuile (10) soit pressé dans une cavité de moule (16) de la pièce de moule (15), dans laquelle la préforme de tuile (10) est agencée en dessous de l'unité de formage (14) et que l'unité de formage (14) est abaissée verticalement sur la préforme de tuile (10), dans laquelle la retenue d'eau (8, 9) et la tuile (1) sont réalisées d'un seul tenant et la retenue d'eau (8, 9) présente un côté arrière plan, dans laquelle la retenue d'eau (8, 9) est enclenchée avec une profondeur T à l'extrémité (7) côté tête de la préforme de tuile (10) de 10 à 20 mm, **caractérisée en ce que**
au moins un nez d'accrochage (23) est réalisé au niveau du côté inférieur (12) de la préforme de tuile (10) à une distance minimale M par rapport à l'extrémité (7) côté tête de la préforme de tuile (10), dans laquelle la distance minimale M correspond à au moins la somme de la profondeur T du décrochement (22) et de l'épaisseur S de la retenue d'eau (8, 9) (M ≥ T + S).

2. Tuile (1) avec une retenue d'eau (8, 9) formée selon la revendication 1, **caractérisée en ce que** la retenue d'eau (8, 9) présente une densité accrue.

3. Tuile (1) avec une retenue d'eau (8, 9) formée selon l'une quelconque des revendications 1 et 2, **caractérisée en ce que** la retenue d'eau présente un angle d'incidence β de 60° à 90°.

4. Tuile (1) avec une retenue d'eau (8, 9) formée selon l'une quelconque des revendications 1 à 3, **caractérisée en ce que** la retenue d'eau présente une épaisseur S de 5 à 15 mm.

5. Tuile (1) avec une retenue d'eau (8, 9) formée selon l'une quelconque des revendications 1 à 4, **caractérisée en ce que** la retenue d'eau présente une hauteur H de 5 à 20 mm.
